# EUROPÄISCHE PATENTSCHRIFT

(11) **EP 0 765 778 B1**
(45) Veröffentlichungstag und Bekanntmachung des Hinweises auf die Patenterteilung: **20.09.2000**
(21) Anmeldenummer: 96112580.4
(22) Anmeldetag: 03.08.1996
(51) Int. Cl.: B60N 2/44, A47C 31/10

(54) **Sitzbezug zum Schutz eines Kraftfahrzeug-Sitzes**
Seat cover for protecting motor car seats
Revêtement de sièges pour la protection de sièges de véhicules automobiles

(30) Priorität: 28.09.1995 DE 19536062
(43) Veröffentlichungstag der Anmeldung: 02.04.1997
(73) Patentinhaber: Horn & Bauer GmbH & Co. KG, 34613 Schwalmstadt (DE)
(72) Erfinder: Horn, Stephanie, 34613 Schwalmstadt (DE)
(74) Vertreter: Patentanwälte Rehberg + Hüppe

(56) Entgegenhaltungen:
- DE-A- 3 419 728
- DE-A- 4 210 232
- DE-C- 4 132 714
- DE-C- 4 333 051
- US-A- 3 695 692
- US-A- 4 676 376
- US-A- 4 884 839

## Beschreibung

Die Erfindung betrifft einen Sitzbezug zum Schutz eines Kraftfahrzeug-Sitzes aus einem doppellagigen Teil aus Kunststoffolie, insbesondere Einmalbezug für Werkstätten, mit einer durchgehenden, die Sitzfläche des Sitzpolsters und die Rückenlehnenfläche der Rückenlehne des Sitzes schützenden Vorderlage und einer mit der Vorderlage durch Querschweißung verbundenen Rücklage, die in Verbindung mit der Vorderlage eine die Rückenlehne des Sitzes zumindest teilweise aufnehmende erste Tasche bildet.

Sitzbezüge aus Kunststoffolie werden über Kraftfahrzeug-Sitze gestülpt bzw. gezogen, um eine Verschmutzung des Kraftfahrzeug-Sitzes durch Monteure und andere Personen zu verhindern. Bekannt sind solche Sitzbezüge in ihrer Anwendung in Automobilwerkstätten, wenn an Kraftfahrzeugen eine Inspektion oder Reparatur durchgeführt wird. Bei einer solchen Reparatur kommt es natürlich vor, daß sich der Monteur mehrmals auf den mit dem Sitzbezug geschützten Kraftfahrzeug-Sitz setzt. Bekanntlich kann man sich auf einen Kraftfahrzeug-Sitz nicht direkt von vorne setzen, wie dies bei einem Stuhl möglich ist; die Sitzbewegung erfolgt vielmehr von der Seite her in das Kraftfahrzeug hinein. Dabei besteht die Gefahr, daß der Sitzbezug auf dem Kraftfahrzeug-Sitz verrutscht, so daß dann Oberflächenbereiche des Sitzpolsters und/oder der Rückenlehne ungeschützt sind und beim nächsten Sitzvorgang mit dem u. U. verschmutzten Monteuranzug direkt in Kontakt kommen.

Ein Sitzbezug der eingangs beschriebenen Art ist aus der DE-A-16 30 878 bekannt. Bei der Herstellung des Sitzbezuges wird ein Schlauch aus Kunststoffolie durch einen Längsschnitt aufgeschnitten. Die dabei entstehenden Ränder werden voneinander entfernt und flach gefaltet im Abstand auf das übrige Material des Schlauches gelegt. Dabei entsteht eine flach liegende, in Bereichen doppellagige Bahn, aus der durch Querschweißungen die einzelnen Sitzbezüge erstellt werden. Das zusammenhängende Materialstück des Schlauches bildet einerseits die Vorderlage und andererseits mit Randbereichen eine Rücklage. Diese Randbereiche der Rücklage bilden mit der daran hängenden Vorderlage je eine Tasche, wobei die erste Tasche dazu bestimmt ist, im oberen Bereich der Rückenlehne des Kraftfahrzeug-Sitzes plaziert zu werden, während die zweite Tasche das freie Ende des Sitzpolsters teilweise übergreifen kann, wenn der Sitzbezug ordnungsgemäß montiert ist. Dieser bekannte Sitzbezug ist aus Kunststoffolie hergestellt. Die Kunststoffolie als Monofolie besitzt auf beiden Oberflächen einen niedrigen Reibungskoeffizienten, ist also relativ glatt ausgebildet. Die Sitzbezüge können aneinanderhängend auf Rollen gewickelt geliefert werden, wobei sie über eine Perforation voneinander getrennt werden. Es ist aber auch möglich, die einzelnen Sitzbezüge bereits bei der Herstellung voneinander zu trennen und diese dann stapelweise, z. B. in einem Umkarton, in Verkehr zu bringen. Bei der Benutzung, also beim Auflegen bzw. Überziehen über einen Kraftfahrzeug-Sitz, ist es zunächst erforderlich, zumindest die für die Rückenlehne bestimmte Tasche zu öffnen, um den Sitzbezug über die Rückenlehne und eine möglicherweise daran vorgesehene Kopfstütze zu ziehen. Das Öffnen der Tasche gelingt infolge Verwendung einer glatten Kunststoffolie leicht, und das Überziehen über den Kraftfahrzeug-Sitz gestaltet sich vergleichsweise problemlos. Da ein solcher Sitzbezug jedoch auch auf seiner Innenseite, also auf der Seite, die der Sitzfläche des Sitzpolsters und der Rückenlehnenfläche der Rückenlehne zugekehrt ist, einen niedrigen Reibungskoeffizienten aufweist, verändert sich die Lage des Sitzbezuges an dem Kraftfahrzeug-Sitz bei jedem Niedersetzen des Monteurs und bei jeder Bewegung auf dem Kraftfahrzeug-Sitz. Dies ist nachteilig, weil dadurch der Sitzbezug unkontrolliert verrutscht und Bereiche des Sitzes von dem Sitzbezug nicht mehr abgedeckt werden, also ungeschützt sind.

Um dem Problem der mangelnden Haftung des Sitzbezuges in montiertem Zustand auf dem Kraftfahrzeug-Sitz zu begegnen, ist es aus der US-A-4,676,376, die auch den gattungsgemäßen Oberbegriff des Anspruchs 1 darstellt, bekannt, koextrudiertes Folienmaterial für die Herstellung des Sitzbezuges einzusetzen. Es handelt sich also um eine zweilagige Folie aus verschiedenen Materialien, die zusammen extrudiert werden, wobei sich die beiden Lagen zu einem einzigen Folienmaterial verbinden. Die beiden Materialpartner werden dabei so eingesetzt und ausgewählt, daß die eine Oberfläche einen relativ hohen und die andere Oberfläche einen vergleichsweise niedrigen Reibungskoeffizienten aufweist. Die Folie ist also auf der einen Seite gleichsam klebend und auf der anderen Seite glatt ausgebildet. Diese Folie wird nun zu dem Sitzbezug in der Weise angeordnet und verarbeitet, daß die mit dem hohen Reibungskoeffizienten ausgestattete klebende Oberfläche der Sitzfläche des Sitzpolsters und der Rückenlehnenfläche der Rückenlehne zugekehrt und damit mit diesen Teilen direkt in Verbindung kommt, während die glatte Oberfläche nach außen gekehrt angeordnet ist und die Kontaktfläche zu dem Monteur bildet. Ein solcher Sitzbezug weist somit vorteilhaft bereits eine befriedigende Haftung auf dem Kraftfahrzeug-Sitz in montiertem Zustand auf, und die nach außen gekehrte glatte Oberfläche verhindert auch weitgehend ein Verrutschen des Sitzbezuges beim Niedersetzen des Monteurs auf dem Kraftfahrzeug-Sitz bzw. bei Bewegungen des Monteurs auf dem Kraftfahrzeug-Sitz. Der wesentliche Nachteil dieses bekannten Sitzes ist jedoch darin zu sehen, daß sich ein solcher Sitzbezug schlecht anlegen läßt. Dies ist darauf zurückzuführen, daß im Bereich der Tasche bzw. der Taschen, sofern eine zweite Tasche für das Sitzpolster vorgesehen ist, Folienbereiche aufeinander liegen, die an ihren einander zugekehrten Kontaktflächen jeweils mit dem hohen Reibungskoeffizient, also klebend, ausgebildet sind. Insoweit läßt sich die Tasche nur mühsam öffnen und auch nur mühsam über den oberen Bereich des Kraftfahrzeug-Sitzes ziehen. Dies gilt insbesondere für relativ groß, also hoch, gestaltete Taschen. Um dem Problem des Öffnens der Tasche entgegenzuwirken, könnte man daran denken, die Taschenhöhe zu verringern. Dann aber entsteht der Nachteil, daß der korrekte und zuverlässige Sitz des Sitzbezuges an dem Kraftfahrzeug-Sitz beeinträchtigt wird, insbesondere dann, wenn der Kraftfahrzeug-Sitz mit vergleichsweise hoch ausladenden oder eingestellten Kopfstützen versehen ist. Eine insoweit kürzer gestaltete Tasche übergreift dann praktisch nur noch die Kopfstütze und kann so seitlich an den überstehenden Eckbereichen der Rückenlehne seitlich verrutschen. Gestaltet man dagegen die Tasche höher bzw. länger, dann ist wiederum der Öffnungsvorgang schwerer, und das Überziehen über die Rückenlehne und die Kopfstütze sind erschwert, wenngleich sich vorteilhaft dadurch ein besserer Sitz an der Rückenlehne ergibt.

Hinzu kommt, daß die praktisch in Verkehr gebrachten Sitzbezüge, um der Wirtschaftlichkeit Rechnung zu tragen, aus einer möglichst dünnen Folie hergestellt sein sollten, schon allein, um den Materialverbrauch an Kunststoff zu minimieren. Dies geschieht nicht zuletzt aus Umweltgesichtspunkten, da ein temporärer Schutz einer Oberfläche durch einen Einmalbezug die natürlichen Resourcen möglichst wenig belasten sollte. Derartige Sitzbezüge aus Monofolie mit einer Dicke von bis zu 0,013 mm haben sich in den Werkstätten durchgesetzt. Gerade aber die Verwendung einer dünnen Folie vergrößert die Probleme des Öffnens der Tasche. Umgekehrt lassen sich die Taschen von Sitzbezügen aus vergleichsweise dicker Kunststoffolie - etwa im Bereich 20 µ und dicker - vergleichsweise leichter öffnen.

Der Erfindung liegt die Aufgabe zugrunde, einen Sitzbezug der eingangs beschriebenen Art bereitzustellen, dessen über die Rückenlehne zu ziehende Tasche sich einerseits leicht öffnen und mühelos mit korrektem Sitz an dem Kraftfahrzeug-Sitz anlegen läßt, der jedoch andererseits auch bei mehrmaligem Platz-Nehmen auf dem mit dem angelegten Sitzbezug geschützten Kraftfahrzeug-Sitz nicht verrutscht.

Erfindungsgemäß wird dies bei einem Sitzbezug der eingangs beschriebenen Art dadurch erreicht, daß die Vorderlage einerseits und die Rücklage andererseits als separate Materialbahnen ausgebildet sind, die miteinander auch durch eine Längsschweißung verbunden sind, daß die die Vorderlage bildende Materialbahn aus coextrudiertem Folienmaterial mit hohem Reibungskoeffizient auf der einen Oberfläche und mit vergleichsweise niedrigem Reibungskoeffizient auf der anderen Oberfläche besteht und mit ihrer den hohen Reibungskoeffizienten aufweisenden Oberfläche der Rücklage zugekehrt angeordnet ist, und daß die die Rücklage bildende Materialbahn zumindest auf ihrer der Vorderlage zugekehrten Oberfläche einen niedrigen Reibungskoeffizienten aufweist.

Die Erfindung geht von dem Gedanken aus, diese teilweise gegenläufigen Forderungen zu erfüllen. Es wird eine erste separate Materialbahn eingesetzt, die die Vorderlage des Sitzbezuges bildet. Getrennt davon wird eine zweite Materialbahn aus Kunststoffolie eingesetzt, die die Rücklage bildet. Nur die die Vorderlage bildende Materialbahn besteht aus einem koextrudierten Folienmaterial mit hohem Reibungskoeffizienten auf der dem Kraftfahrzeug-Sitz zugekehrten Seite, während die andere Oberfläche, die dem Monteur zugewandt ist, glatt ausgebildet ist. Für die Rücklage ist es wichtig, eine Folie einzusetzen, die zumindest auf ihrer der Vorderlage zugekehrten Innenseite glatt ausgebildet ist. Damit wird eine Doppelfunktion erreicht: einerseits läßt sich die durch die betreffenden Bereiche der Vorderlage und der Rücklage gebildete Tasche leicht und mühelos öffnen, beispielsweise durch einen einfachen Schüttelvorgang. Dies gilt unabhängig davon, ob der Sitzbezug stapelweise verpackt in Verkehr kommt oder auf Rolle gewickelt. Andererseits ist es gerade diese Innenseite oder innere Oberfläche der Rücklage, die beim Überziehen über die Kopfstütze und die Rückenlehne mit den betreffenden Teilen der Rückenlehne in Kontakt kommt. Damit wird das Anlegen des Sitzbezuges in seinem ersten Arbeitsschritt erheblich erleichtert, weil die Innenseite der Rücklage der Tasche am Sitz gleitet. Das Überstülpen dieses Bereiches und das Herabziehen können schnell, mühelos und zuverlässig durchgeführt werden, wobei gleichzeitig auch eine Ausrichtung des Sitzbezuges relativ zur vertikalen Längsmittelebene des Kraftfahrzeug-Sitzes erfolgt. Trotzdem ergibt sich ein rutschfester Sitz des Sitzbezuges an dem Kraftfahrzeug-Sitz, sobald die Vorderlage mit der Rückenlehnenfläche der Rückenlehne und der Sitzfläche des Sitzpolsters in Kontakt kommt. Der Sitzbezug erhält damit seinen ordnungsgemäßen Sitz auf dem Kraftfahrzeug-Sitz. Die Gefahr, daß der Sitzbezug auch bei mehrmaligem Platz-Nehmen verrutscht, ist praktisch beseitigt. Selbst eine Beanspruchung in Querrichtung zum Sitz, wie sie für einen Ein- oder Aussteigevorgang an einem Kraftfahrzeug typisch ist, führt nicht zu einem Verrutschen des Sitzbezuges. Ein weiterer Vorteil ist darin zu sehen, daß vorteilhaft auch vergleichsweise dünne Folien zur Bildung der Vorderlage einerseits und der Rücklage andererseits eingesetzt werden können, ohne die Taschenöffnung zu verschlechtern. Es können dünne Folien von beispielsweise 13 µ oder noch darunter eingesetzt werden, so daß der Rohstoffverbrauch minimiert ist. Jedes für die Vorderlage einerseits und für die Rücklage andererseits eingesetzte Materialstück kann durch die getrennte Herstellung so gestaltet werden, daß bisher bekannte Beschränkungen in der Ausbildung überschritten werden. So ist es beispielsweise möglich, die Innenseite der Vorderlage aus koextrudierter Folie besonders klebend, also mit besonders hohem Reibungskoeffizienten, auszubilden. Umgekehrt kann die Innenseite der Rücklage sehr glatt ausgebildet werden, also z. B. auch mit höherem Gleitmittelanteil als bisher bekannt. Auch eine besonders hoch bzw. lang gestaltete Tasche im Bereich der Rückenlehne, wie es für unterschiedliche Kraftfahrzeug-Sitze in Werkstätten unter Einschluß unterschiedlich hoch eingestellter Kopfstützen sinnvoll ist, stört den leichten Öffnungsvorgang der Tasche nicht mehr. Die Erfindung läßt sich anwenden, wenn der Sitzbezug nur eine Tasche für den Bereich der Rückenlehne aufweist. Es ist aber auch möglich, problemlos den Sitzbezug mit zwei Taschen zu fertigen und zu handhaben, wobei die zweite Tasche dann im Bereich des Sitzpolsters angelegt wird.

Die die Rücklage bildende Materialbahn kann auf beiden Oberflächen einen niedrigen Reibungskoeffizienten aufweisen. Dies vereinfacht die Herstellung der die Rücklage bildenden Materialbahn und erleichtert auch das Auseinanderfalten eines beispielsweise mehrfach zusammengefalteten Sitzbezuges. So ist es ohne weiteres möglich, daß die die Rücklage bildende Materialbahn aus einer einlagigen Kunststoffolie besteht, die dann zweckmäßig auch auf beiden Seiten einen gleichen, relativ niedrigen Reibungskoeffizienten aufweist.

Es dient dem leichteren Erkennen der zu öffnenden Tasche und der erleichterten Handhabung des Sitzbezuges, wenn die die Rücklage bildende Materialbahn im Vergleich zu der die Vorderlage bildenden Materialbahn andersfarbig ausgebildet ist. So kann beispielsweise die Vorderlage aus einer weiß eingefärbten Materialbahn bestehen, während die die erste Tasche bildende Rücklage aus einer z. B. blau eingefärbten Materialbahn besteht. Diese Verschiedenfarbigkeit setzt zugleich einen optischen Reiz und hält den Benutzer dazu an, beim Aufziehen des Sitzbezuges an dem Kraftfahrzeug-Sitz auf einen ordnungsgemäßen Sitz zu achten. Es kann eine dritte separate Materialbahn vorgesehen sein, die zumindest auf ihrer der Vorderlage zugekehrten Oberfläche einen niedrigen Reibungskoeffizienten aufweist und zur Bildung einer das Sitzpolster zumindest teilweise umschließenden zweiten Tasche mit der Vorderlage durch Längs- und Querschweißungen verbunden ist. Diese dritte separate Materialbahn kann aus dem gleichen Kunststoffmaterial bestehen wie die zweite Materialbahn, die die erste Tasche bildet. Es ist aber auch möglich, im Bereich der Rücklage insoweit unterschiedliche Folien einzusetzen. Die einzelnen Folien können je nach den gewünschten Eigenschaften ausgebildet werden.

Auch die dritte separate Materialbahn kann im Vergleich zu der ersten, die Vorderlage bildenden Materialbahn andersfarbig ausgebildet sein, damit auch diese zweite Tasche leicht erkennbar ist. Wenn die dritte separate Materialbahn im Vergleich zu der die erste Rücklage bildenden Materialbahn andersfarbig ausgebildet ist, kann der Monteur bereits optisch die beiden Taschen voneinander unterscheiden, so daß, z. B. bei unterschiedlicher Höhe der beiden Taschen, sichergestellt wird und leicht überprüfbar ist, ob auch die in der Regel höhere Tasche für die Rückenlehne an der Rückenlehne angelegt ist und nicht etwa im Bereich des Sitzpolsters angelegt ist.

Durch die Verwendung separater, unterschiedlich hergestellter Materialbahnen für die Vorderlage einerseits und die Rücklage andererseits wird es möglich, die Oberfläche mit hohem Reibungskoeffizienten, also die klebende Oberfläche noch klebender als bisher auszustatten, ohne befürchten zu müssen, daß die durch Faltung der Vorderlage gebildete Tasche schwer oder garnicht mehr zu öffnen ist. So kann die die Vorderlage bildende Materialbahn auf ihrer der Rücklage zugekehrten Oberfläche einen Reibungskoeffizienten von etwa 1,0 oder auch > 1,0 und auf ihrer der Rücklage abgekehrten Oberfläche einen Reibungskoeffizienten von etwa 0,1 aufweisen. Auch die die Rücklage bildende Materialbahn kann auf ihrer der Vorderlage zugekehrten Oberfläche einen Reibungskoeffizienten von etwa 0,01 aufweisen. Da für die Rücklage eine Monofolie wie bei dem heute am meisten verbreiteten Sitzbezug mit hohem Gleitmittelgehalt verwendet werden kann, gibt es keine Beschränkung durch das Öffnen der Tasche bzw. durch die Anbringung am Sitz. Bei solchen Monofolien können die Reibungskoeffizienten zwischen etwa 0,05 und 0,1 schwanken. Bei Verwendung von koextrudiertem Folienmaterial gemäß Stand der Technik, bei dem die Tasche durch Umfalten gebildet wird, ergibt sich auf ihrer der Rücklage zugekehrten Oberfläche ein Reibungskoeffizient von etwa 0,2 bis 0,8 und auf ihrer der Rücklage abgekehrten Oberfläche ein Reibungskoeffizient von etwa 0,1 bis 0,2. Die hier angegebenen Reibungskoeffizienten können unter Anlehnung an DIN 53 375 als Verhältnis der Reibungskraft zu der Normalkraft (200 g) angesehen werden.

Durch die besondere Ausbildung der Materialbahnen für die Vorderlage einerseits und die Rücklage andererseits können auch sehr dünne Kunststoffolien eingesetzt und verwendet werden. So können die die Vorderlage bildende Materialbahn und die die Rücklage bildende Materialbahn je eine Dicke im Bereich von etwa 13 µ aufweisen.

Die Erfindung wird anhand bevorzugter Ausführungsbeispiele weiter erläutert und beschrieben. Es zeigen:
- Fig. 1: eine Draufsicht auf die Vorderlage eines Sitzbezuges in einer ersten Ausführungsform,
- Fig. 2: eine Seitenansicht des Sitzbezuges gemäß Fig. 1,
- Fig. 3: eine Vorderansicht auf die Vorderlage eines Sitzbezuges in einer zweiten Ausführungsform,
- Fig. 4: eine Seitenansicht des Sitzbezuges gemäß Fig. 3,
- Fig. 5: eine Seitenansicht des auf einen Kraftfahrzeug-Sitz aufgesetzten Sitzbezuges der Fig. 3 und 4,
- Fig. 6: einen Ausschnitt durch ein die Vorderlage bildendes Materialstück in Seitenansicht gemäß Fig. 2 oder 4, in stark vergrößernder Darstellung, und
- Fig. 7: eine Seitenansicht auf einen Ausschnitt aus einer die Rücklage bildenden Materialbahn, ebenfalls in stark vergrößernder Darstellung.

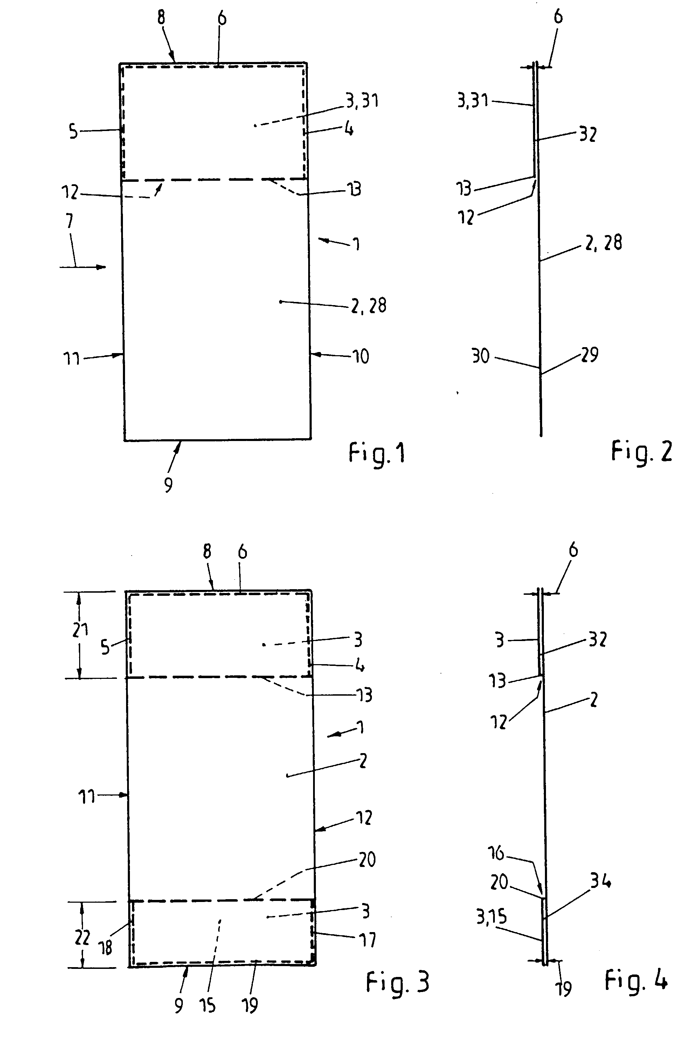

In Fig. 1 ist die Draufsicht auf einen Sitzbezug 1 dargestellt. Der Sitzbezug ist aus einer Vorderlage 2 und einer Rücklage 3 zusammengesetzt, die jeweils separate, getrennte Folienstücke darstellen. Aus Fig. 2 ist die gegenseitige Überdeckung von Vorderlage 2 und Rücklage 3 erkennbar. Das die Rücklage 3 bildende Materialstück ist mit der Vorderlage über zwei Querschweißungen 4 und 5 und eine Längsschweißung 6 verbunden, wobei die Längsschweißung 6 in Fig. 2 lediglich durch eine Pfeildarstellung angedeutet ist.

Die Herstellung des Sitzbezuges 1 erfolgt in an sich bekannter Weise durch das Zusammenführen der beiden einerseits die Vorderlage 2 und andererseits die Rücklage 3 bildenden Bahnen. Dies geschieht in Laufrichtung gemäß Pfeil 7. Die beiden Bahnen besitzen in Laufrichtung gemäß Pfeil 7 freie Ränder 8 und 9. Die anderen Ränder 10 und 11 erstrecken sich quer zur Laufrichtung gemäß Pfeil 7. Die Vorderlage 2 und die Rücklage 3 können so miteinander verbunden werden, daß die Verbindungsbereiche sich entlang der freien Ränder des Sitzbezuges erstrecken. Es ist aber auch möglich, diese Verbindungsbereiche etwas zu verschieben, beispielsweise in den oberen Bereich der Vorderlage der Tasche 12 hinein, also insbesondere in einen solchen Bereich der Tasche 12, der an der Kopfstütze des Kraftfahrzeug-Sitzes zu liegen kommt. Hier ist ein hoher Reibungskoeffizient nicht erforderlich und durch die Verlegung des Verbindungsbereiches erleichtert sich das Aufwickeln der aneinanderhängenden Sitzbezüge auf der Rolle.

Wenn die Sitzbezüge 1 im Laufe ihrer Herstellung völlig voneinander getrennt werden sollen, erfolgt jeweils ein Schnitt oder eine Trennschweißung quer zur Laufrichtung gemäß Pfeil 7, wobei die Ränder 10 und 11 gebildet werden. Wenn die Herstellung so ausgerichtet ist, daß die Sitzbezüge aneinanderhängend letztlich auf Rolle aufgewickelt werden, sind in bekannter Weise im Bereich der Ränder 10 und 11 Perforationen gebildet, die jeweils ein Abreißen eines Sitzbezuges 1 nach dem anderen von der Rolle ermöglichen.

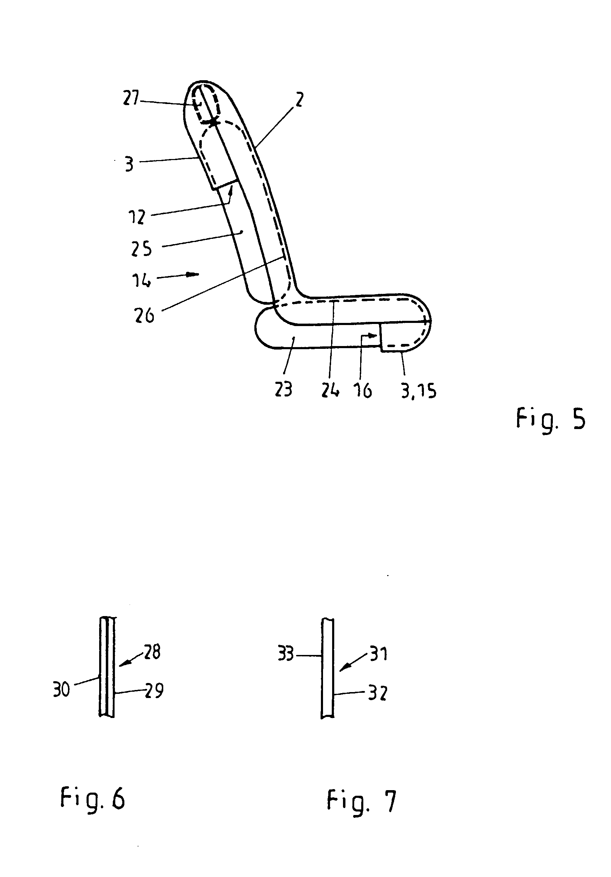

Der obere Bereich der Vorderlage 2 bildet mit der Rücklage 3 eine Tasche 12, die nur an ihrem Unterrand 13 offen ist, während die drei übrigen Seiten durch die Querschweißungen 4 und 5 und die Längsschweißung 6 geschlossen ist. Diese Tasche 12 gilt es zu öffnen, bevor ein Sitzbezug 1, wie etwa in Fig. 5 dargestellt, über einen Kraftfahrzeug-Sitz 14 gezogen werden kann. Der neue Sitzbezug ermöglicht ein vergleichsweise erleichtertes Öffnen der Tasche 12 und ein erleichtertes Überziehen über die Rücklehne des Kraftfahrzeug-Sitzes. Diese vom Monteur ungeliebte Arbeit wird damit erheblich erleichtert. Als weiterer Vorteil ergibt sich im aufgezogenen Zustand ein fester sicherer und gleichsam unverrückbarer Halt des Sitzbezuges auf dem Kraftfahrzeug-Sitz, also die beabsichtigte Schutzwirkung.

In den Fig. 3 und 4 ist ein weiteres Ausführungsbeispiel eines Sitzbezuges 1 dargestellt, wobei auch hier eine Vorderlage 2 und eine Rücklage 3 vorgesehen sind. Diese beiden Materialstücke bilden auch hier die Tasche 12, die für die Rückenlehne des Kraftfahrzeug-Sitzes 14 bestimmt ist. Es ist jedoch noch eine weitere Materialbahn 15 im unteren Bereich vorgesehen, welches insoweit die Rücklage 3 ergänzt. Diese Materialbahn 15 bildet zusammen mit dem unteren Bereich der Vorderlage 2 eine zweite Tasche 16. Die Tasche 16 ist durch zwei Querschweißungen 17 und 18 sowie durch eine Längsschweißung 19 an drei Seiten geschlossen ausgebildet und nur entlang ihres Oberrandes 20 offen. Die Höhe 21 der Tasche 12 ist zweckmäßig größer bzw. länger als die Höhe 22 der zweiten Tasche 16. Insbesondere kann die Höhe der Tasche 12 doppelt so groß bzw. lang wie die Höhe der Tasche 16 ausgebildet sein, ohne daß die leichte Öffnungsmöglichkeit der Tasche 12 dadurch beeinträchtigt wird. Die Taschen 12 und 16 können jedoch auch gleiche Höhe aufweisen.

In Fig. 5 ist ein Kraftfahrzeug-Sitz 14 schematisch in Seitenansicht angedeutet. Der Kraftfahrzeug-Sitz 14 weist bekanntlich ein Sitzpolster 23 mit einer Sitzfläche 24 und eine Rückenlehne 25 mit einer Rückenlehnenfläche 26 auf. Eine Kopfstütze 27 befindet sich am oberen Ende der Rückenlehne 25.

Zur Herstellung der Sitzbezüge 1 gemäß den Fig. 1 bis 4 dient eine die Vorderlage 2 bildende Materialbahn 28, die in Fig. 6 in vergrößernder Darstellung wiedergegeben ist. Die Materialbahn 28 besteht aus koextrudiertem Folienmaterial, bei dem - wie dargestellt - zwei Schichten miteinander verbunden sind. Die eine Schicht weist eine Oberfläche 29 mit niedrigem Reibungskoeffizienten auf, während die andere- Schicht eine Oberfläche 30 mit hohem Reibungskoeffizienten besitzt. Die Materialbahn kann auch aus drei Schichten (oder mehr) koextrudiert sein, wobei dann zwischen den beiden dargestellten Schichten eine weitere Schicht angeordnet ist. Diese Mittelschicht kann zur Verbesserung der Reißfestigkeit dienen. In allen Fällen wird die Materialbahn 28 so angeordnet, wie dies in Fig. 2 erkennbar ist, und zwar so, daß die Oberfläche 30 mit dem hohen Reibungskoeffizienten der Rücklage 3 zugekehrt angeordnet ist. Entsprechendes gilt für das Ausführungsbeispiel der Fig. 3 und 4.

Fig. 7 zeigt eine Materialbahn 31, die zur Bildung der Rücklage 3 eingesetzt wird. Die Materialbahn 31 weist eine Oberfläche 32 mit niedrigerem Reibungskoeffizienten auf. Auch die andere Oberfläche 33 kann einen niedrigen Reibungskoeffizienten besitzen.

Bei einer Monofolie, also einer einlagigen Folie, können die beiden Oberflächen 32 und 33 gleich glatt ausgebildet sein. Die Materialbahn 31 wird so angeordnet, wie dies beispielsweise aus Fig. 2 ersichtlich ist, also so, daß jedenfalls eine glatte Oberfläche 32 der Vorderlage 2 zugekehrt ist. Damit liegen innerhalb einer Tasche 12 - und entsprechend in einer Tasche 16 - jeweils Materialbahnen aneinander, von denen die eine einen hohen Reibungskoeffizienten und die andere einen niedrigen Reibungskoeffizienten aufweisen. Dies ist die Ursache dafür, daß sich die Taschen 12 und 16 leicht öffnen lassen, und zwar trotz Ausstattung der Materialbahn 28 mit einem höheren Reibungskoeffizienten, als dies bisher im Stand der Technik bekannt ist. Die Materialbahnen 15 und 31 können aus dem gleichen Material bestehen.

Sinnvoll ist es, die verschiedenen Materialbahnen 28, 32, 15 jeweils unterschiedlich einzufärben. Die Materialbahn 28 kann beispielsweise weiß oder durchscheinend ausgebildet sein, während die Materialbahn 31 beispielsweise blau eingefärbt ist. Die Materialbahn 15 kann grau eingefärbt sein. In diesem Falle ist sofort leicht erkennbar, welches die Tasche 12 ist, die dem oberen Bereich der Rückenlehne 25 und der Kopfstütze 27 zugeordnet ist.

Die Herstellung der Sitzbezüge 1 erfolgt in der Weise, daß endlose Materialbahnen 28 und 31 übereinander in Richtung des Pfeiles 7 geführt werden und dabei eine Relativlage erreichen, wie dies in Fig. 1 angedeutet ist. Es erfolgt dann die Anbringung der Längsschweißung 6 entlang des einen Randes 8 und die Anbringung der Querschweißungen 4 und 5, so daß die Materialbahnen 28 und 31 unter Bildung der Tasche 12 miteinander verbunden sind. Entlang der Ränder 10 und 11 können dann entweder Perforationen angeordnet werden, wenn die Sitzbezüge 1 aneinanderhängend auf Rolle aufgewickelt werden sollen. Wenn eine stapelweise Lieferung beabsichtigt ist, erfolgt ein Abtrennen bzw. Abschneiden der einzelnen Sitzbezüge 1 entlang der Ränder 10 und 11, meist mit einem nachgeschalteten Zusammenlegvorgang.

Bei dem Ausführungsbeispiel der Fig. 3 und 4 findet noch die Materialbahn 15 zusätzlich Verwendung. Diese wird entsprechend der Materialbahn 31 ausgebildet und angeordnet. Auch die Materialbahn 15 hat eine Oberfläche 34 mit niedrigem Reibungskoeffizienten.

### BEZUGSZEICHENLISTE

- 1 -: Sitzbezug
- 2 -: Vorderlage
- 3 -: Rücklage
- 4 -: Querschweißung
- 5 -: Querschweißung
- 6 -: Längsschweißung
- 7 -: Pfeil
- 8 -: Rand
- 9 -: Rand
- 10 -: Rand
- 11 -: Rand
- 12 -: Tasche
- 13 -: Unterrand
- 14 -: Kraftfahrzeug-Sitz
- 15 -: Materialbahn
- 16 -: Tasche
- 17 -: Querschweißung
- 18 -: Querschweißung
- 19 -: Längsschweißung
- 20 -: Oberrand
- 21 -: Höhe
- 22 -: Höhe
- 23 -: Sitzpolster
- 24 -: Sitzfläche
- 25 -: Rückenlehne
- 26 -: Rückenlehnenfläche
- 27 -: Kopfstütze
- 28 -: Materialbahn
- 29 -: Oberfläche
- 30 -: Oberfläche
- 31 -: Materialbahn
- 32 -: Oberfläche
- 33 -: Oberfläche
- 34 -: Oberfläche

## Patentansprüche

1. Sitzbezug (1) zum Schutz eines Kraftfahrzeug-Sitzes (14) aus einem doppellagigen Teil aus Kunststoffolie, insbesondere Einmalbezug für Werkstätten, mit einer durchgehenden, die Sitzfläche (24) des Sitzpolsters (23) und die Rückenlehnenfläche (26) der Rückenlehne (25) des Sitzes schützenden Vorderlage (2) und einer mit der Vorderlage durch Querschweißung (4, 5) verbundenen Rücklage (3), die in Verbindung mit der Vorderlage (2) eine die Rückenlehne (25) des Sitzes zumindest teilweise aufnehmende erste Tasche (12) bildet, **dadurch gekennzeichnet**, daß die Vorderlage (2) einerseits und die Rücklage (3) andererseits als separate Materialbahnen (28, 31) ausgebildet sind, die miteinander auch durch eine Längsschweißung (6) verbunden sind, daß die die Vorderlage (2) bildende Materialbahn (28) aus coextrudiertem Folienmaterial mit hohem Reibungskoeffizient auf der einen Oberfläche (30) und mit vergleichsweise niedrigem Reibungskoeffizient auf der anderen Oberfläche (29) besteht und mit ihrer den hohen Reibungskoeffizienten aufweisenden Oberfläche (30) der Rücklage (3) zugekehrt angeordnet ist, und daß die die Rücklage (3) bildende Materialbahn (31) zumindest auf ihrer der Vorderlage (2) zugekehrten Oberfläche (32) einen niedrigen Reibungskoeffizienten aufweist.

2. Sitzbezug nach Anspruch 1, **dadurch gekennzeichnet**, daß die die Rücklage (3) bildende Materialbahn (31) auf beiden Oberflächen (32, 33) einen niedrigen Reibungskoeffizienten aufweist.

3. Sitzbezug nach Anspruch 1, **dadurch gekennzeichnet**, daß die die Vorderlage (2) bildende Materialbahn (28) aus einer dreilagigen koextrudierten Kunststoffolie besteht, wobei die mittlere Lage der Verbesserung der Reißfestigkeit dient.

4. Sitzbezug nach einem der Ansprüche 1 bis 3, **dadurch gekennzeichnet**, daß die die Rücklage (3) bildende Materialbahn (31) im Vergleich zu der die Vorderlage (2) bildenden Materialbahn (28) andersfarbig ausgebildet ist.

5. Sitzbezug nach einem der Ansprüche 1 bis 4, **dadurch gekennzeichnet**, daß eine dritte separate Materialbahn (15) vorgesehen ist, die zumindest auf ihrer der Vorderlage (2) zugekehrten Oberfläche (34) einen niedrigen Reibungskoeffizienten aufweist und zur Bildung einer das Sitzpolster (23) zumindest teilweise umschließenden zweiten Tasche (16) mit der Vorderlage (2) durch Längs- und Querschweißungen (19, 17, 18) verbunden ist.

6. Sitzbezug nach Anspruch 5, **dadurch gekennzeichnet**, daß die dritte separate Materialbahn (15) im Vergleich zu der ersten, die Vorderlage (2) bildenden Materialbahn (28) andersfarbig ausgebildet ist.

7. Sitzbezug nach Anspruch 5 oder 6, **dadurch gekennzeichnet**, daß die dritte separate Materialbahn (15) im Vergleich zu der die erste Rücklage (3) bildenden Materialbahn (31) andersfarbig ausgebildet ist.

8. Sitzbezug nach Anspruch 1, **dadurch gekennzeichnet**, daß die die Vorderlage (2) bildende Materialbahn (28) auf ihrer der Rücklage (3) zugekehrten Oberfläche (30) einen Reibungskoeffizienten von etwa 1,0 und auf ihrer der Rücklage (3) abgekehrten Oberfläche (29) einen Reibungskoeffizienten von etwa 0,1 aufweist.

9. Sitzbezug nach Anspruch 1 oder 8, **dadurch gekennzeichnet,** daß die die Rücklage (3) bildende Materialbahn (31) auf ihrer der Vorderlage (2) zugekehrten Oberfläche (32) einen Reibungskoeffizienten von etwa 0,1 aufweist.

10. Sitzbezug nach Anspruch 1, **dadurch gekennzeichnet**, daß die die Vorderlage (2) bildende Materialbahn (28) und die die Rücklage (3) bildende Materialbahn (31) je eine Dicke im Bereich von etwa 13 µ aufweisen.

## Claims

1. A seat cover (1) for protecting a motor vehicle seat (14), the seat cover being made from a double-layered piece of plastic film, in particular for the single use in car workshops, comprising a front layer (2) extending over and protecting the seating (24) of the seat cushion (23) and the backrest surface (26) of the backrest (25) of the seat, and a rear layer (3) connected with the front layer by transverse welding (4, 5) and together with the front layer (2) forming a first pocket (12) for the reception of at least a part of the backrest (25), **wherein** the front layer (2) on the one hand and the rear layer (3) on the other hand are separate foils (28, 31) connected to each other by a longitudinal welding (6) also, the foil (28) forming the front layer (2) consists of coextruded plastic material having a high friction coefficient on the one surface (30) and a comparatively low friction coefficient on the other surface (29), the foil (28) is located so that the surface (30) having the high friction coefficient is facing the rear layer (3), and the foil (31) forming the rear layer (3) has a low friction coefficient at least on its surface (32) facing the front layer (2).

2. The seat cover of claim 1, **wherein** the foil (31) forming the rear layer (3) has a low friction coefficient on its both surfaces (32, 33).

3. The seat cover of claim 1, **wherein** the foil (28) forming the front layer (2) consists of a three-layered coextruded plastic material, in which the medium film serves to improve the ultimate tensile strength.

4. The seat cover of claims 1 to 3, **wherein** the foil (31) forming the rear layer (3) is coloured differently to the foil (28) forming the front layer (2).

5. The seat cover of claims 1 to 4, **wherein** a third separate foil (15) is provided, which has a low friction coefficient at least on its surface (34) facing the front layer (2) and which is connected with the front layer (2) by longitudinal and transverse weldings (19, 17, 18) to form a second pocket (16) serving to receive at least parts of the seat cushion (23).

6. The seat cover of claim 5, **wherein** the third separate foil (15) is coloured differently to the first foil (28) forming the front layer (2).

7. The seat cover of claim 5 or 6, **wherein** the third separate foil (15) is coloured differently to the foil (31) forming the rear layer (3).

8. The seat cover of claim 1, **wherein** the foil (28) forming the front layer (2) on its surface (30) facing the rear layer (3) has a friction coefficient of about 1,0 and on its surface (29) opposite to the rear layer (3) a friction coefficient of about 0,1.

9. The seat cover of claim 1, **wherein** the foil (31) forming the rear layer (3) on its surface (32) facing the front layer (2) has a friction coefficient of about 0,1.

10. The seat cover of claim 1, **wherein** the foil (28) forming the front layer (2) and the foil (31) forming the rear layer (3) each have a thickness of about 13 µ.

## Revendications

1. Housse de siège (1), destinée à protéger un siège (14) de véhicule automobile à moteur, constituée d'une feuille en matière plastique à deux couches, notamment une housse à usage unique pour ateliers, avec une couche avant (2) en un seul tenant qui protège la surface d'assise (24) du coussin d'assise (23) et la surface d'appui (26) du dossier (25) du siège et avec une couche arrière (3) réunie à la couche avant par une soudure transversale (4, 5), couche arrière qui forme avec la couche avant (2) une première poche (12) coiffant une partie au moins du dossier (25) du siège, caractérisée
en ce que la couche avant (2), d'une part, et la couche arrière (3), d'autre part, ont la forme de lés distincts (28, 31) qui sont encore réunis entre eux au moyen d'une soudure longitudinale (6)
en ce que le lé (28) formant la couche avant (2) est constituée d'une feuille faite d'un matériau coextrudé présentant un haut coefficient de frottement sur l'une des faces (30) et un coefficient de frottement comparativement plus faible sur l'autre face (29) et qu'il est orienté avec sa face (30) qui présente le coefficient de frottement élevé, vers la couche arrière (3) et
en ce que le lé (31) formant la couche arrière (3) présente au moins sur la face (32) tournée vers la couche avant (2) un faible coefficient de frottement.

2. Housse de siège suivant la revendication 1, caractérisée
en ce que le lé (31) formant la couche arrière (3) présente sur ses deux faces (32,33) un faible coefficient de frottement.

3. Housse de siège suivant la revendication 1, caractérisée
en ce que le lé (28) formant la couche avant (2) est constitué d'un matériau fait d'une feuille coextrudée à trois couches, où la couche médiane est destinée à en augmenter la résistance au déchirement.

4. Housse de siège suivant l'une quelconque des revendications 1 à 3, caractérisée
en ce qu'il est donné au lé (31) formant la couche arrière (3) une couleur différente de celle du lé (28) formant la couche avant (2).

5. Housse de siège suivant l'une quelconque des revendications 1 à 4, caractérisée
en ce qu'il est prévu un troisième lé (15) distinct dont au moins la surface (34) côté couche avant (2) présente un faible coefficient de frottement et qu'en vue de la formation d'une deuxième poche (16) destinée à envelopper au moins en partie le coussin d'assise (23), ce lé est réuni à la couche avant (2) par des soudures (19, 17, 18) longitudinales et transversales.

6. Housse de siège suivant la revendication 5, caractérisée
en ce qu'il est donné au troisième lé (15) distinct une couleur différente de celle du lé (28) formant la couche avant (2).

7. Housse de siège suivant la revendication 5 ou la revendication 6, caractérisée
en ce qu'il est donné au troisième lé (15) distinct une couleur différente de celle du lé (31) formant la couche arrière (3).

8. Housse de siège suivant la revendication 1, caractérisée
en ce que le lé (28) formant la couche avant (2) présente, sur la surface (30) se trouvant du côté orienté vers la couche arrière (3), un coefficient de frottement d'environ 1,0 et, sur la surface (29) se trouvant du côté non orienté vers la couche arrière (3), un coefficient de frottement d'environ 0,1.

9. Housse de siège suivant la revendication 1 ou la revendication 8, caractérisée
en ce que le lé (31) formant la couche arrière (3) présente, sur la face (32) se trouvant du côté orienté vers la couche avant (2), un coefficient de frottement d'environ 0,1.

10. Housse de siège suivant la revendication 1, caractérisée
en ce que le lé (28) formant la couche avant (2) et le lé (31) formant la couche arrière (3) présentent, chacun, une épaisseur d'environ treize micromètres.
